Europäisches Patentamt

European Patent Office

Office européen des brevets

(11) Veröffentlichungsnummer: **0 226 875**
**A1**

(12) **EUROPÄISCHE PATENTANMELDUNG**

(21) Anmeldenummer: **86116594.2**

(22) Anmeldetag: **28.11.86**

(51) Int. Cl.⁴: **F16K 15/16 , F04B 39/10**

(30) Priorität: **09.12.85 CH 5247/85**

(43) Veröffentlichungstag der Anmeldung:
**01.07.87 Patentblatt 87/27**

(84) Benannte Vertragsstaaten:
**AT DE ES FR GB IT NL SE**

(71) Anmelder: **Maschinenfabrik Sulzer-Burckhardt AG
Dornacherstrasse 210
CH-4002 Basel(CH)**

(72) Erfinder: **Ostermann, Erwin
Birchstrasse 68
CH-8057 Zürich(CH)**

(74) Vertreter: **Dipl.-Ing. H. Marsch Dipl.-Ing. K.
Sparing Dipl.-Phys.Dr. W.H. Röhl
Patentanwälte
Rethelstrasse 123 Postfach 14 02 68
D-4000 Düsseldorf(DE)**

(54) **Ventil der Ringplattenbauart für einen Kolbenkompressor.**

(57) Das Ventil weist einen im Kompressorgehäuse befestigten Ventilsitz (3), einen an diesem mit Abstand befestigten Fänger (60) und eine zwischen dem Ventilsitz (3) und dem Fänger (60) bewegbare Ventilplatte (4) auf. Der Ventilsitz und die Ventilplatte haben gegeneinander versetzte Durchbrüche (13 bzw. 14) für das durchströmende Gas. Im Fänger - (60) sind zu den Durchbrüchen (14) in der Ventilplatte fluchtende Durchbrüche (66) für das durchströmende Gas vorgesehen. Diese Durchbrüche - (66) sind venturidüsenartig ausgebildet und der Strömungsquerschnitt jedes Durchbruchs (14) in der Ventilplatte (4) ist grösser als der engste Strömungsquerschnitt des jeweils dazu fluchtenden Durchbruchs (66).

Hierdurch werden auf konstruktiv einfache Weise die Strömungsverluste des Ventils verringert.

FIG. 2

## Ventil der Ringplattenbauart für einen Kolbenkompressor

Die Erfindung betrifft ein Ventil der Ringplattenbauart für einen Kolbenkompressor, mit einem im Gehäuse des Kompressors befestigten Ventilsitz, einem an diesem mit Abstand befestigten Fänger und einer zwischen dem Ventilsitz und dem Fänger bewegbaren Ventilplatte, die mindestens auf ihrer dem Fänger zugewendeten Seite eine ebene Fläche bildet, wobei der Ventilsitz und die Ventilplatte gegeneinander versetzte Durchbrüche für das durchströmende Gas aufweisen und wobei im Fänger zu den Durchbrüchen in der Ventilplatte fluchtende Durchbrüche für das durchströmende Gas vorgesehen sind und der Fänger auf der der Ventilplatte zugewendeten Seite eine ebene Fläche bildet.

Bei den bekannten Ventilen dieser Art können die Durchbrüche im Fänger an deren Eintrittseite ein Stück weit mit zur Ventilachse parallelen Begrenzungsflächen versehen sein, die sich dann zur Austrittsseite der Fängerplatte hin konisch erweitern. Am Uebergang vom achsparallelen zum sich erweiternden Verlauf der Begrenzungsflächen ist eine Kante vorhanden. Die Durchbrüche in der Ventil platte sind von parallel zur Ventilachse verlaufenden Flächen begrenzt. Die Strömungsquerschnitte der Durch brüche in der Ventilplatte sind gleich dem Querschnitt der Durchbrüche im Fänger auf dessen Eintrittseite. Beim Durchströmen des Gases durch die Durchbrüche wird der Gasstrom beim Uebergang vom Ventilsitz zur Ventilplatte zweimal umgelenkt und gelangt dann in die Durchbrüche des Fängers, wobei sich wegen der zweiten scharfkantigen Umlenkung am Eintritt in die Ventilplatte der Gasstrom von den Begrenzungsflächen der in der Ventilplatte und im Fänger befindlichen Durchbrüche ablöst. Dieses Ablösen erhöht die Strömungsverluste durch Verwirbelung von kinetischer Energie am Fängeraustritt.

Der Erfindung liegt die Aufgabe zugrunde, das Ventil der eingangs genannten Art so zu verbessern, dass auf konstruktiv einfache Weise die Strömungsverluste des Ventils verringert werden.

Diese Aufgabe wird erfindungsgemäss durch die Merkmale des kennzeichnenden Teils des Anspruchs I gelöst.

Bei dieser Gestaltung der Durchbrüche ist also der Strömungsquerschnitt der Durchbrüche in der Ventilplatte grösser als der engste Querschnitt der venturidüsenartigen Durchbrüche im Fänger. Die Länge der venturidüsenartigen Durchbrüche im Fänger ist grösser als die der Durchbrüche im bekannten Fänger. Infolge des relativ zum Strömungsquerschnitt in der Ventilplatte kleineren Strömungsquerschnitts im Fänger wird nach der zweiten Umlenkung des Gasstromes, d.h. nach der Strömungsablösung an den Eintrittskanten der Ventilplatte beim Uebertritt in deren Durchbrüche, erreicht, dass die Gasströmung vom Eintritt in den jeweiligen Durchbruch des Fängers an an der venturidüsenartigen Begrenzungsfläche anliegt. Damit wird einerseits die Grösse der Ablösungsszene reduziert. Andererseits arbeitet der Diffusor wirksamer, d.h. es wird in ihm mehr kinetische Energie in Druckenergie umgewandet, wozu besonders auch die grössere Diffusorlänge beiträgt. Der Bereich, in dem das Verhältnis des engsten Strömungsquerschnitts im Durchbruch des Fängers zum Strömungsquerschnitt im fluchtenden Durchbruch der Ventilplatte variieren kann, beträgt 0,6 bis 0,8.

Einige Ausführungsbeispiele der Erfindung sind in der folgenden Beschreibung anhand der Zeichnung näher erläutert. Es zeigen:

Fig. I im Axialschnitt ein Saugventil der Ringplattenbauart nach dem Stand der Technik,

Fig. 2 einen Axialschnitt eines Teils eines Ventils nach der Erfindung,

Fig. 3 bis 5 je einen Axialschnitt eines Ventilteils im Bereich eines Durchbruches im Fänger und

Fig. 6 bis 8 je einen Axialschnitt eines Teils eines Saugventils.

Gemäss Fig. I ist in einem Gehäuse I eines nicht näher dargestellten Kompressorzylinders ein Saugventil 2 angeordnet, das im wesentlichen aus einem plattenförmigen Ventilsitz 3, einer Ventilplatte 4, einer Dampferplatte 5 und einem plattenförmigen Fänger 6 besteht. Der Ventilsitz 3 ruht mit seinem Rand auf einer Schulter 7 einer Bohrung 8 im Gehäuse I und ist in dieser Bohrung mittels einer Laterne 9 befestigt, die von einem Ansaugkanal I0 her auf den Rand des Ventilsitzes 3 gedrückt wird. Am Ventilsitz ist mittels einer zentralen Schraube II mit Mutter I2 der Fänger 6 befestigt, wobei zwischen den beiden Teilen 3 und 6 ein Abstand zur Aufnahme der beweglichen Ventilplatte 4 und der Dampferplatte 5 besteht. Ein Stift 23 steckt in je einer axialen Sackbohrung im Ventilsitz 3 und im Fänger 6 und erstreckt sich durch eine entsprechend angeordnete Bohrung in der Ventilplatte 4 und der Dämpferplatte 5. Er verhindert eine Relativdrehung der vier plattenförmigen Teile gegeneinander.

Im Ventilsitz 3 sind in diesem Beispiel auf vier verschiedenen Radien Durchbrüche I3 vorgesehen, die sich in Umfangsrichtung erstrecken und deren Verlauf an mehreren Stellen durch radiale Stege unterbrochen ist, die also die zwischen den Durchbrüchen befindlichen Rippen miteinander verbinden. Zwischen je zwei benachbarten Durchbrüchen I3 befinden sich in der Ventilplatte 4 Durchbrüche I4, die parallel zu den Durchbrüchen I3 verlaufen.

Innerhalb des innersten Durchbruchs 13 befindet sich in der Ventilplatte 4 ein entsprechender Durchbruch 14', der ebenfalls parallel zum innersten Durchbruch 13 verläuft und dessen Strömungsquerschnitt etwa halb so gross ist, wie der Strömungsquerschnitt jedes der übrigen Durchbrüche 14. Die die Durchbrüche 14 und 14' begrenzenden Flächen verlaufen parallel zur Ventilachse. Fluchtend zu den Durchbrüchen 14 und 14' sind in der Dampferplatte 5 Durchbrüche 15 bzw. 15' vorgesehen, die gleich gross und gleich geformt sind wie die Durchbrüche 14 bzw. 14'. Schliesslich weist der Fänger 6 zu den Durchbrüchen 14, 14' sowie 15 und 15' fluchtende Durchbrüche 16 auf, deren Begrenzungsflächen zunächst ein Stück weit parallel zur Ventilachse verlaufen und sich anschliessend geradlinig konisch erweitern. Im Bereich der parallel zur Ventilachse verlaufenden Begrenzungsflächen der Durchbrüche 16 haben diese einen gleich grossen Strömungsquerschnitt wie die mit ihnen fluchtenden Durchbrüche 14 und 15. Die Durchbrüche 13, 14, 14', 15, 15' und 16 dienen dem Durchtritt des über den Ansaugkanal 10 zuströmenden Gases, das sich nach Verlassen der Durchbrüche 16 in einem unterhalb des Fängers 6 befindlichen, vom Gehäuse 1 begrenzten Raum 18, dem sog. Nest, sammelt, der über einen zentralen Kanal 19 mit dem nicht näher dargestellten Zylinderraum 20 des Kompressors in Verbindung steht.

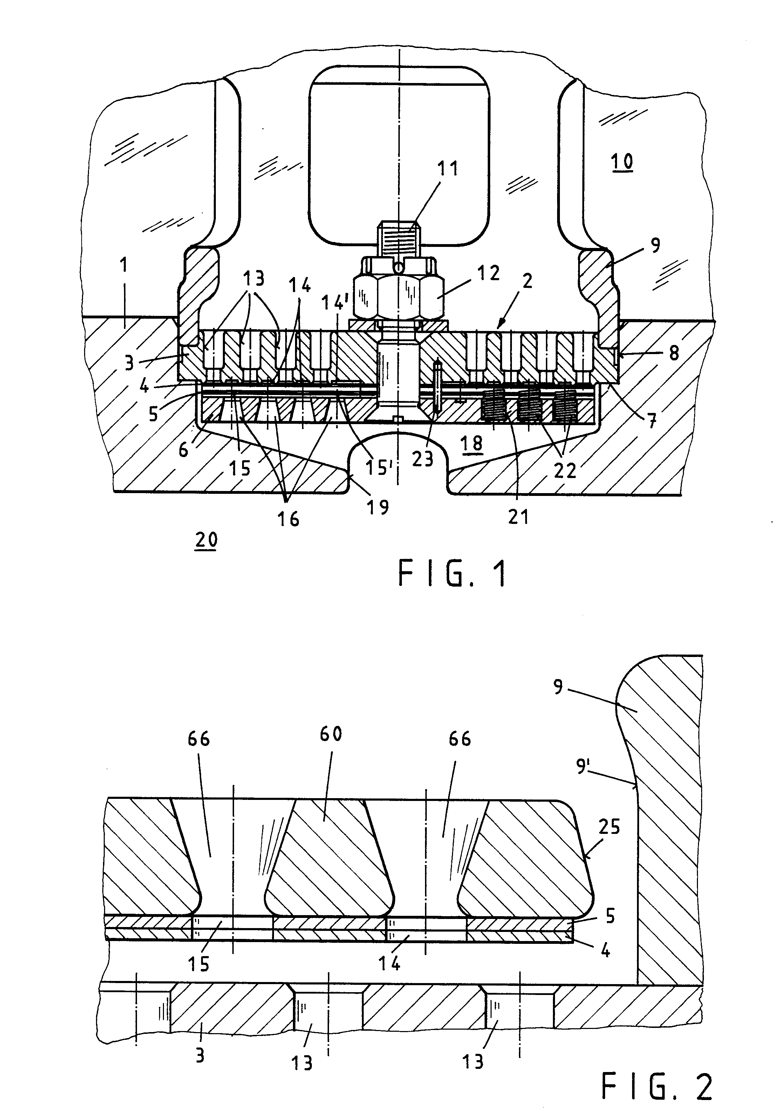

Wie Fig. 1 noch erkennen lässt, weist der Fänger 6 ausser den Durchbrüchen 16 noch Bohrungen 21 auf, in denen je eine Schraubenfeder 22 untergebracht ist; die Federn erstrecken sich durch die Dämpferplatte 5 hindurch und liegen an der Ventilplatte 4 an. Die Federn 22 unterstützen also die Schliessbewegung der Ventilplatte 4 beim Kompressionshub und beim Ausschieben des komprimierten Gases. Beim Saughub dagegen bewegen die Gas-Strömungskräfte die Ventilplatte 4 gegen die Kraft der Federn 22 in Richtung auf die Dampferplatte 5 und sie lässt das Gas, wie erwähnt, durch die Durchbrüche der vier plattenförmigen Teile strömen, wobei es auf den Weg von den Durchbrüchen 13 zu den Durchbrüchen 14, 14' zweimal scharf um 90° umgelenkt wird. Eine weitere, jedoch weniger scharfe Umlenkung findet beim Uebergang in den Raum 18 statt.

Der bisher beschriebene Aufbau des Saugventils ist bei einem Druckventil grundsätzlich gleich, d.h. dass es bei strömungsmässig gleicher Reihenfolge der Ventilbestandteile (Ventilsitz, Ventilplatte, Dampferplatte und Fänger) so in das Gehäuse 1 eingebaut wird, dass es -wegen der zum Saughub umgekehrten Strömungsrichtung -beim Kompressionshub öffnet. Der zwischen der Schulter 7 und der Laterne 9 eingespannte Ventilsitz ist dann also

dem Raum 18 benachbart und der Fänger 6 ragt in den Laternenraum, wobei sich die Laterne in den Druckkanal erstreckt. In diesem Sinne sind die in Fig. 2 bis 5 gezeichneten Ventile Druckventile.

Beim Ausführungsbeispiel der Erfindung nach Fig. 2 sind die Durchbrüche 66 im Fänger 60 venturidüsenartig ausgebildet, indem die Begrenzungsflächen dieser Durchbrüche vom Eintrittsquerschnitt des Fängers aus gerundet bis zum engsten Querschnitt des betreffenden Durchbruchs verlaufen und dann vom engsten Querschnitt aus ohne Absatz in die anschliessende diffusorartige Erweiterung übergehen. Bezogen auf den engsten Querschnitt der Durchbrüche 66 haben die mit ihnen fluchtenden Durchbrüche 15 und 14 in der Dämpferplatte 5 bzw. Ventilplatte 4 einen grösseren Querschnitt. Einen gerundeten Verlauf weist auch der Uebergang des Fängers 60 an seinem äusseren Umfang auf, so dass auch hier sich zwischen der äusseren Umfangsfläche 25 und der benachbarten Begrenzungsfläche 9' der Laterne 9 ein venturidüsenartiger Strömungsquerschnitt ergibt. Wesentlich ist hierbei, dass jeweils der Aussendurchmesser der Ventilplatte 4 und der Dämpferplatte 5 kleiner ist als der grösste Durchmesser des Fängers 60.

Durch diese Formgebung des Fängers 60 und entsprechende Dimensionierung der Diffusoren - (Länge, Winkel) in den Durchbrüchen 66 wie auch zwischen den Flächen 25, 9' sowie durch die Dimensionierung der Durchbrüche 14, 15 lassen sich die beim Durchströmen des Gases auftretenden Verluste erheblich verringern, im Vergleich zur bekannten Gestaltung der Durchbrüche 14,15,16, da die von den Durchbrüchen 13 kommende und über die Durchbrüche 14, 15 in die Durchbrüche 66 gelangende Gasströmung sich nach Passieren des engsten Querschnitts an die sich erweiternden Begrenzungsflächen der Durchbrüche 66 anlegt. Das gleiche gilt für die den Ringspalt zwischen den Begrenzungsflächen 25 und 9' passierende Gasströmung. Indem also Strömungsablösungen verhindert werden, wird in den venturidüsenartig geformten Kanälen vermehrt kinetische Energie des Gases in Druckenergie verwandelt, wodurch die Ventilverluste insgesamt herabgesetzt werden.

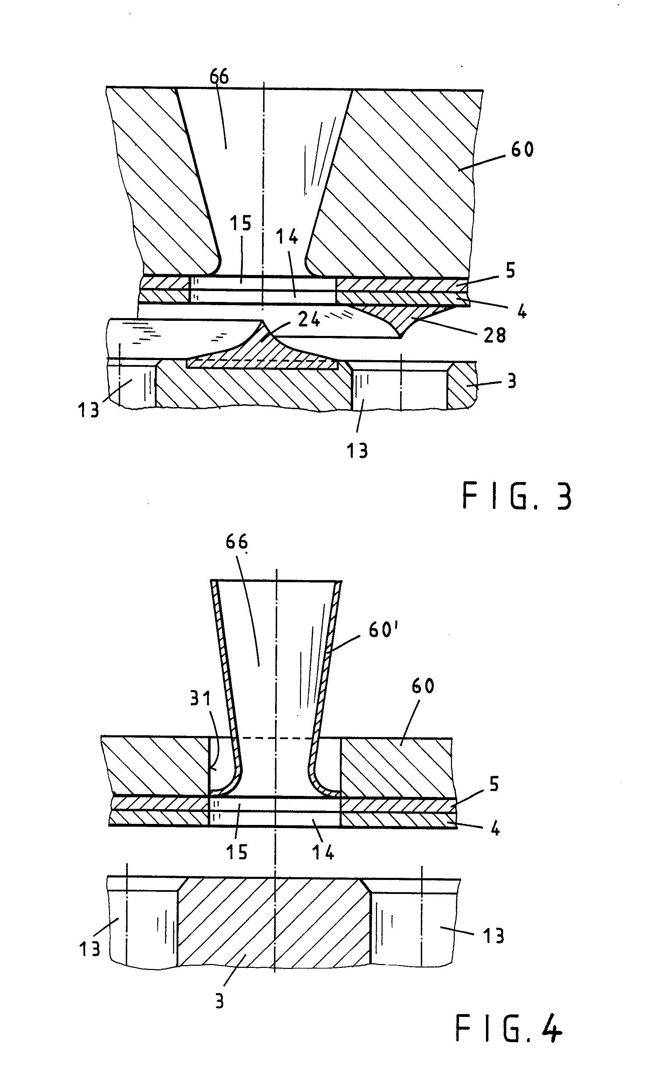

Gemäss Fig. 3 sind der Ventilsitz 3, die Ventilplatte 4, die Dampferplatte 5 und der Fänger 60 hinsichtlich der Durchbrüche 13, 14, 15 und 66 gleich ausgebildet wie das Ausführungsbeispiel nach Fig. 2. Zusätzlich ist jedoch am Ventilsitz 3 ein Strömungsleitkörper 24 vorgesehen, der, von seiner am Ventilsitz anliegenden Basis ausgehend, sich zum Durchbruch 66 hin verjüngt. Die sich verjüngenden Begrenzungsflächen des Strömungsleitkörpers 24 sind konkav und treffen sich in einem spitzen Winkel, dessen Scheitelpunkt auf der Achse des Durchbruchs 66 liegt. In Umfangsrichtung erstreckt sich der Leitkörper 24 im wesentlichen über die gleiche Länge wie der zugehörige Durchbruch 66. In gleicher Weise ist an der Ventilplatte 4, fluchtend zum Durchbruch 13 im Ventilsitz 3, ein Strömungsleitkörper 28 angebracht, der in seiner Formgebung der des Leitkörpers 24 entspricht, jedoch einen vollen Kreis beschreibt. Durch die Strömungsleitkörper 24 und 28 wird das Bestreben, die Ventilverluste herabzusetzen, weiter unterstützt. Wenn die Ventilplatte 4 sich in geschlossener Stellung befindet, d.h. auf dem Ventilsitz 3 aufliegt, so ragen die Strömungsleitkörper 24 und 28 in den zugehörigen Durchbruch 14 bzw. 13.

Für die mit der Erfindung angestrebte erhöhte Umwandlung von kinetischer Energie des Gases in Druckenergie ist eine bestimmte Länge der venturidüsenartigen Durchbrüche 66 zweckmässig, was bei den bisher beschriebenen Ausführungsbeispielen der Erfindung zur Folge hat, dass die Dicke des plattenförmigen Fängers 60 grösser ist als beim bekannten Ventil nach Fig. I. Die grössere Dicke des Fängers könnte aus Gründen des höheren Gewichtes als nachteilig empfunden werden. Um dem abzuhelfen, ist beim Ausführungsbeispiel nach Fig. 4 der plattenförmige Teil des Fängers 60 etwa gleich dick ausgebildet wie beim bekannten Ventil und ausserdem ist im Fänger ein Durchbruch 31 mit zur Ventilachse parallelen Begrenzungsflächen vorgesehen, dessen Querschnittsabmessungen etwa gleich gross sind wie die der Durchbrüche 14 und 15 in der Ventilplatte 4 bzw. Dämpferplatte 5. Der venturidüsenartige Durchbruch 66 beim Ventil nach Fig. 4 ist dadurch realisiert, dass in den Durchbruch 31 ein Blechformkörper 60' eingesetzt ist, der mit seinem Eintrittsende nahe der Dämpferplatte 5 im Durchbruch 31 befestigt ist, z.B. durch Schweissen.

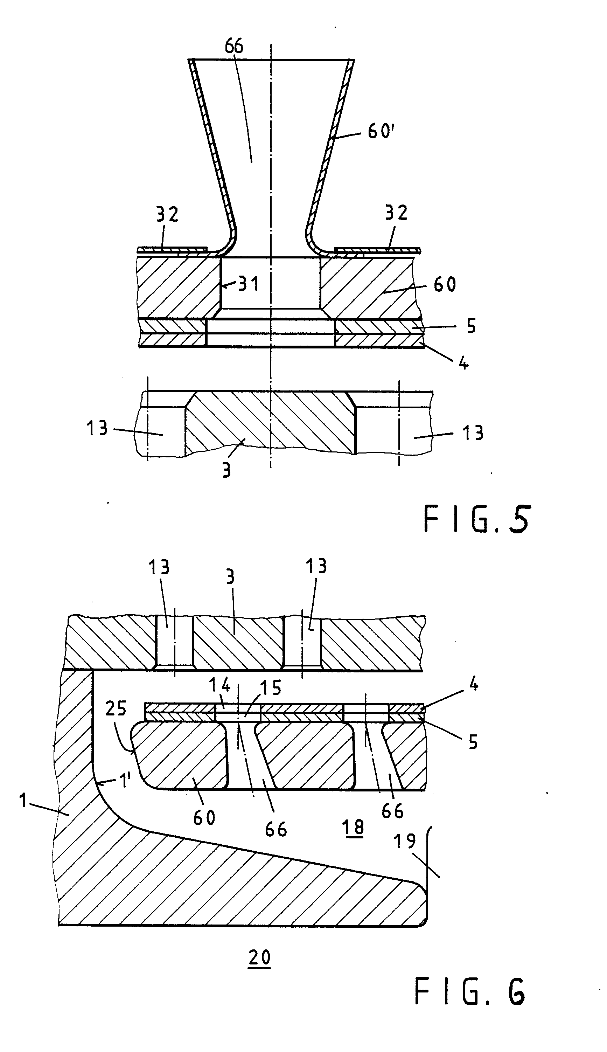

Eine ähnliche Ausführungsform ist in Fig. 5 gezeigt, bei dem der venturidüsenartige Blechformkörper 60' nicht im Durchbruch 31 selbst, sondern auf der der Dampferplatte 5 abgewendeten Seite des plattenförmigen Teils des Fängers 60 befestigt ist. Diese Befestigung kann z.B. mittels nicht dargestellter Schrauben erfolgen, die über Blechstreifen 32 die Blechformkörper 60' an den plattenförmigen Teil des Fängers anpressen. Dabei können mit einem Blechstreifen 32 zwei einander benachbarte Formkörper gehalten werden. Es ist auch möglich, anstelle der Blechstreifen 32 eine der Ventilplatte ähnliche Platte zum Festhalten der Blechformstücke 60' zu verwenden.

Wenn die beschriebenen Ventile als Saugventil im Kompressor verwendet werden, wobei also das aus den venturidüsenartigen Durchbrüchen 66 austretende Gas im Raum 18 einer Umlenkung unterworfen ist, so sind an den Ventilen weitere Verbesserungen möglich, die zur Herabsetzung der Ventilverluste beitragen.

So sind bei der Ausführungsform nach Fig. 6 die Durchbrüche 66 im Fänger 60 wiederum venturidüsenartig geformt, wobei jedoch die Achse der Durchbrüche derart schief verläuft, dass der Austrittsquerschnitt dieser Durchbrüche näher zur Ventilachse hin liegt als der zugehörige Eintrittsquerschnitt. Hierdurch ergibt sich der Vorteil, dass das aus den Durchbrüchen 66 austretende Gas schon eine Bewegungskomponente in Richtung auf den zentralen Kanal 19 erhält, was ebenfalls im Sinne einer Verringerung der Strömungsverluste durch Umlenkung liegt. Ausserdem ist die Formgebung des Ringspaltes zwischen der Umfangsfläche 25 des Fängers 60 und der Begrenzungsfläche I' des Gehäuses I venturidüsenartig. Daran anschliessend ist die Begrenzungsfläche I' so gestaltet, dass der Strömungsquerschnitt bis zum benachbarten Durchbruch 66 kontinuierlich zunimmt.

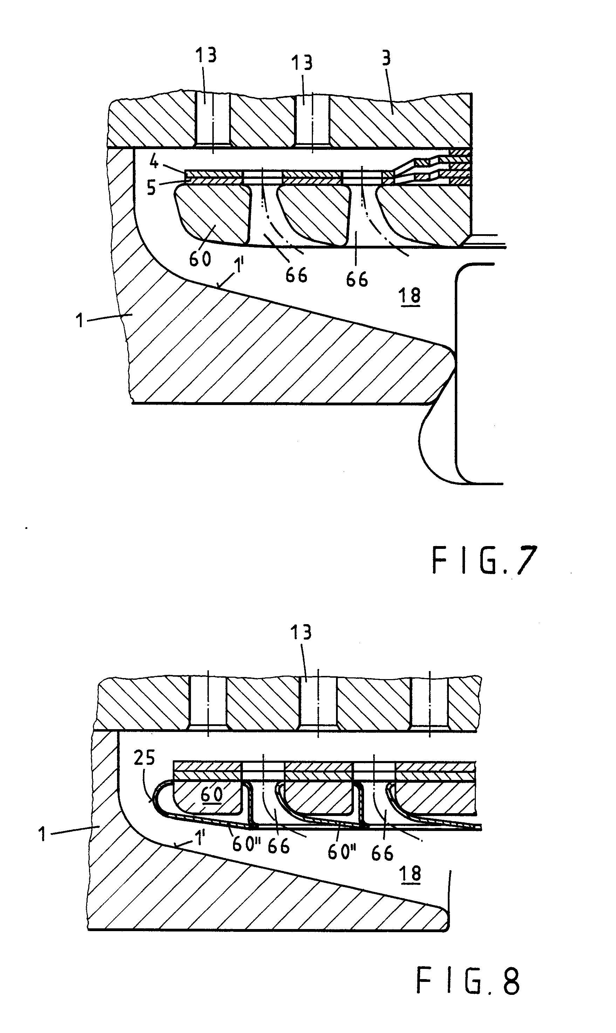

Beim Ausführungsbeispiel nach Fig. 7 sind die Austrittsquerschnitte der Durchbrüche 66 im Fänger 60 gegen die Ventilachse hin so erweitert, dass die Austrittsquerschnitte zweier benachbarter Durchbrüche fast ineinander übergehen Das aus den Durchbrüchen 66 austretende Gas strömt dadurch fast parallel zu der den Raum 18 begrenzenden Fläche I' des Gehäuses I. Die Dimensionierung der Strömungsquerschnitte erfolgt so, dass in Strömungsrichtung die wirksamen Querschnitte leicht zunehmen.

Gemäss Fig. 8 ist die Formgebung der Durchbrüche 66 sehr ähnlich derjenigen nach Fig. 7, jedoch sind die Durchbrüche nicht direkt im plattenförmigen Fänger 60 eingearbeitet, sondern durch Blechformkörper 60" gebildet, die am plattenförmigen Teil des Fängers in geeigneter Weise befestigt sind, z.B. durch Löten oder Schweissen. Zugleich bildet beim äussersten Blechformkörper dessen äussere Kontur die Begrenzungsfläche 25 des Ringspaltes, der auch hier wieder -wie in Fig. 6 und 7 -zusammen mit dem benachbarten Abschnitt der Begrenzungsfläche I' die Form eines venturidüsenartigen Strömungskanals hat.

Die Formkörper 60' und 60" können statt aus Blech auch aus Kunststoff oder Keramik bestehen.

**Ansprüche**

I. Ventil der Ringplattenbauart für einen Kolbenkompressor, mit einem im Gehäuse des Kompressors befestigten Ventilsitz, einem an diesem mit Abstand befestigten Fänger und einer zwischen dem Ventilsitz und dem Fänger bewegbaren Ventilplatte, die mindestens auf ihrer dem Fänger zugewendeten Seite eine ebene Fläche bildet, wobei der Ventilsitz und die Ventilplatte gegeneinander versetzte Durchbrüche für das durchströmende Gas aufweisen und wobei im Fänger zu den Durchbrüchen in der Ventilplatte fluchtende Durchbrüche für das durchströmende Gas vorgesehen sind und der Fänger auf der der Ventilplatte zugewendeten Seite eine ebene Fläche bildet, dadurch **gekennzeichnet** , dass unter Vergrösserung der Dicke des Fängers die Durchbrüche im Fänger venturidüsenartig ausgebildet sind und dass der Strömungsquerschnitt jedes Durchbruchs in der Ventilplatte grösser ist als der engste Strömungsquerschnitt des jeweils dazu fluchtenden venturidüsenartig ausgebildeten Durchbruchs im Fänger, so dass sich die jeweils am Eintritt in einen Durchbruch der Ventilplatte ablösende Gasströmung am Eintritt in den fluchtenden Durchbruch des Fängers an die venturidüsenartig ausgebildete Fläche dieses Durchbruchs anlegt.

2. Ventil nach Anspruch I, dadurch gekennzeichnet, dass -ausgehend von den Abmessungen der Durchbrüche in der Ventilplatte -die Begrenzungsfläche jedes venturidüsenartig ausgebildeten Durchbruches im Fänger vom Eintritt aus gerundet bis zum engsten Querschnitt verläuft und dann stufenlos in die sich anschliessende, zum Austritt führende Erweiterung übergeht.

3. Ventil nach Anspruch I oder 2, dadurch gekennzeichnet, dass am Ventilsitz und/oder an der dem Fänger abgewendeten Seite der Ventilplatte Strömungsleitkörper angeordnet sind.

4. Ventil nach einem der Ansprüche I bis 3, dadurch gekennzeichnet, dass die venturidüsenartig ausgebildeten Durchbrüche durch am Fänger angebrachte Formkörper, z.B. aus Blech, gebildet sind.

5. Ventil nach einem der Ansprüche I bis 4, dadurch gekennzeichnet, dass die äussere, der Gehäusewand benachbarte Umfangsfläche des Fängers von der der Ventilplatte benachbarten Fläche aus bis zu einem engsten Querschnitt gerundet verläuft und daran anschliessend so gestaltet ist, dass sie zusammen mit der Gehäusewand einen sich diffusorartig erweiternden Kanal bildet.

6. Ventil nach einem der Ansprüche I bis 5, dadurch gekennzeichnet, dass -wenn das Ventil als Saugventil im Kompressor eingebaut ist -die Formgebung der venturidüsenartigen Durchbrüche im Fänger derart ist, dass die Austrittsquerschnitte der Durchbrüche relativ zu den zugehörigen Eintrittsquerschnitten zur Ventilachse hin versetzt liegen.

FIG. 1

FIG. 2

FIG. 3

FIG. 4

F I G. 5

F I G. 6

F I G. 7

F I G. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A- 959 994  (G. BRUN) <br> * Figuren 1-8 * | 1,2 | F 16 K  15/16 <br> F 04 B  39/10 |
| | --- | | |
| A | FR-A-1 467 898  (LES PROCEDES CHABAY) <br> * Figuren 1-4 * | 1 | |
| | --- | | |
| A | DE-A-  692 177  (HOERBIGER & CO.) | | |
| | --- | | |
| A | GB-A-2 040 022 <br> (ALSTHOM-ATLANTIQUE SA) | | |
| | --- | | |
| A | FR-A-1 061 785  (STE INDUSTRIELLE D'APPLICATIONS MECANIQUES SA) | | |
| | --- | | RECHERCHIERTE SACHGEBIETE (Int. Cl.4) |
| A | EP-A-0 089 773  (MC MECHANICAL PRODUCTS LTD) | | F 16 K <br> F 04 B |
| | --- | | |
| A | FR-A-1 063 206  (A. BEDUE) | | |
| | --- | | |
| A | US-A-3 158 175  (F. JAKLITSCH) | | |
| | --- | | |
| A | US-A-2 162 832  (L.C. BAUMGARTEN) | | |
| | ----- | | |

Der vorliegende Recherchenbericht wurde für alle Patentansprüche erstellt.

| Recherchenort <br> DEN HAAG | Abschlußdatum der Recherche <br> 16-03-1987 | Prüfer <br> FRANKS N.M. |
|---|---|---|